# EUROPÄISCHE PATENTSCHRIFT

(11) **EP 1 153 659 B1**
(45) Veröffentlichungstag und Bekanntmachung des Hinweises auf die Patenterteilung: **13.09.2006**
(21) Anmeldenummer: 01110713.3
(22) Anmeldetag: 03.05.2001
(51) Int. Cl.: B01J 35/04, B01J 37/02

(54) **Wabenkörper aus einem keramischen Material mit verbesserter radialer Druckfestigkeit**
Ceramic honeycomb body with improved resistance to pressure
Corps en nid d'abeille constitué par un matériau céramique avec une résistance radiale à pression améliorée

(30) Priorität: 13.05.2000 DE 10024038
(43) Veröffentlichungstag der Anmeldung: 14.11.2001
(73) Patentinhaber: Umicore AG & Co. KG, 63457 Hanau-Wolfgang (DE)
(72) Erfinder: Domesle, Rainer, Dr., 63755 Alzenau-Kälberau (DE); Kreuzer, Thomas, Dr., 61184 Karben (DE); Lox, Egbert, Dr., 63403 Hanau (DE)
(74) Vertreter: Stellbrink, Axel

(56) Entgegenhaltungen:
- DE-A- 19 508 681
- DE-A- 19 902 540
- DE-A- 19 925 391
- GB-A- 2 071 639
- GB-A- 2 071 640
- US-A- 4 233 351

## Beschreibung

Die Erfindung betrifft ein Verfahren zur Herstellung eines Wabenkörper aus einem keramischen Material mit verbesserte radialer Druckfestigkeit.

Keramische Körper in Wabenform werden in großer Stückzahl auf dem Gebiet der Katalyse eingesetzt - speziell auf dem Gebiet der katalytischen Reinigung von Kraftfahrzeugabgasen. Sie dienen als Tragkörper für den eigentlichen Katalysator, der gewöhnlich in Form einer katalytisch aktive Beschichtung auf den Tragkörpern aufgebracht ist. Diese Katalysatoren werden im folgenden als Beschichtungskatalysatoren bezeichnet. Die Tragkörper besitzen eine allgemein zylindrische Form und werden von zwei Stirnflächen und einem Zylindermantel begrenzt. Sie werden von einer Stirnfläche zur anderen von achsenparallelen Kanälen, sogenannten Strömungskanälen, durchzogen, durch die das zu reinigende Abgas geleitet wird. Solche Tragkörper werden auch als Wabenkörper bezeichnet.

Der Katalysator zur Umsetzung der im Abgas enthaltenen Schadstoffe (hauptsächlich Kohlenwasserstoffe, Kohlenmonoxid und Stickoxide) besteht im allgemeinen aus hochoberflächigen Pulvermaterialien, auf denen die eigentlichen katalytisch aktiven Komponenten in hochdisperser Form abgeschieden sind. Dieser Katalysator wird auf die Trennwände zwischen den Strömungskanälen in Form einer Beschichtung aufgebracht. Zur Beschichtung der Trenn- beziehungsweise Kanalwände mit den Pulvermaterialien wird zunächst eine Beschichtungssuspension hergestellt. Hierzu werden die Pulvermaterialien gewöhnlich in Wasser suspendiert. Der Feststoffgehalt (Trockenmasse der Pulvermaterialien) der Suspension liegt je nach Anwendungsfall üblicherweise zwischen 30 und 60 Gew.-%, bezogen auf das Gesamtgewicht der Beschichtungssuspension.

Die derzeit überwiegend in der Abgaskatalyse eingesetzten keramischen Wabenkörper werden durch Extrusion keramischer Massen hergestellt. Sie haben quadratische, rechteckige oder hexagonale Strömungskanäle mit Zelldichten (Anzahl der Strömungskanäle pro Querschnittsfläche) von 62 cm⁻². Die Dicke der Kanalwände beträgt dabei zirka 0,16 mm. Der einen Wabenkörper begrenzende Zylindermantel ist in der Regel von gleicher Dicke wie die Kanalwände. Bei bestimmten Ausführungsformen wird der Zylindermantel jedoch zur Erhöhung der mechanischen Stabilität etwas dicker ausgebildet als die Trennwände der Kanäle.

Die frischen, extrudierten Wabenkörper werden zunächst getrocknet. Die so hergestellten Grünkörper werden dann durch Brennen bei Temperaturen bis zu 1500° C (abhängig vom Material) in die fertigen Wabenkörper überführt. Um den Wabenkörpern eine ausreichende mechanische Stabilität zu verleihen wird die Temperatur beim Brennen abhängig vom verwendeten keramischen Material so gewählt, daß das Material zu einer festen Keramik versintert. Dabei vermindert sich die spezifische Oberfläche des keramischen Materials auf weniger als 10, häufig sogar auf weniger als 2 m²/g. Diese Wabenkörper werden gewöhnlich auch als inert bezeichnet, da sie wegen ihrer geringen spezifischen Oberfläche nicht selbst als Träger für die katalytisch aktiven Komponenten geeignet sind und nur im vernachlässigbaren Umfang an der katalytischen Umsetzung der im Abgas enthaltenen Schadstoffe teilnehmen.

Von den soeben beschriebenen Beschichtungskatalysatoren sind die sogenannten Vollkatalysatoren zu unterscheiden, die teilweise oder vollständig aus katalytisch aktiver Masse bestehen und keine gesonderte katalytisch aktive Beschichtung aufweisen. Das Material, aus dem diese Vollkatalysatoren bestehen, ist hochporös und besitzt eine hohe spezifische Oberfläche. Die beim Brennen dieser keramischen Körper angewendeten Temperaturen liegen deutlich unter den Brenntemperaturen der inerten Wabenkörper. Aufgrund dieser Tatsache sind diese Wabenkörper auch nach dem Brennen noch relativ weich. Wegen der geringen Festigkeit sind die typischen Zelldichten dieser Wabenkörper auf Werte unter 5 cm⁻² beschränkt. Die Dicke der Trennwände zwischen den Strömungskanälen beträgt gewöhnlich etwa 1 mm.

Zur Verbesserung der katalytischen Umsetzungsgrade für die Schadstoffe sind inerte Wabenkörper mit Zelldichten bis 200 cm⁻² und Wandstärken von nur noch 0,1 mm und weniger in der Entwicklung. Diese hochzelligen Wabenkörper stellen eine wesentlich höhere geometrische Oberfläche für die katalytische Beschichtung zur Verfügung und heizen sich auf Grund ihrer geringeren Masse deutlich schneller auf die Betriebstemperatur des Katalysators auf.

Die mechanische Festigkeit der hochzelligen, inerten Wabenkörper, insbesondere ihre radiale Druckfestigkeit, ist wegen der geringen Wanddicken schlechter als bei Wabenkörpern mit herkömmlichen Zelldichten und bereiten bei der Handhabung während der Fertigung der Katalysatoren Probleme, insbesondere beim Einbau in das Konvertergehäuse. Zur Erhöhung der mechanischen Festigkeit wird daher versucht, die dem Zylindermantel benachbarten äußeren Lagen der Strömungskanäle mit größeren Wanddicken auszurüsten als im Zentrum der Wabenkörper. Solche Wabenkörper werden zum Beispiel in der DE 199 02 540 A1 beschrieben. Sie werden im folgenden als inhomogene Wabenkörper bezeichnet, während konventionelle Wabenkörper mit gleichmäßigen Wanddicken - abgesehen von einem verstärkten Zylindermantel - als homogene Wabenkörper bezeichnet werden. Inhomogene Wabenkörper mit ungleichmäßigen Wanddicken sind schwer zu extrudieren.

Es ist bekannt, die Anströmkanten von inerten Tragkörpern für Abgasreinigungskatalysatoren durch Auf- oder Einbringen von anorganischen Stoffen gegen Abrieb aufgrund der im Abgas enthaltenen Partikel zu verstärken (DE 195 47 599 C 1 und. DE 195 47 597 C1). Die Verstärkung wird gemäß diesen Dokumenten gleichmäßig über den gesamten Querschnitt der Wabenkörper vorgenommen und reicht von der Anström-Stirnfläche des Wabenkörpers bis in eine Tiefe, die bis zum zwanzigfachen eines effektiven Zelldurchmessers betragen kann.

Die GB-A-2 071 639 beschreibt einen keramischen Honigerabenstrukturkörper, bei dem der äußere periphere Teil eine kleinere Porosität hat als der übrige Teil der Honigerabenstrukturkörpers.

Aufgabe der vorliegenden Erfindung ist die Bereitstellung von keramischen Wabenkörpern für Abgasreinigungskatalysatoren, die eine verbesserte radiale Druckfestigkeit aufweisen. Bei den keramischen Wabenkörpern kann es sich um inerte Tragkörper für Beschichtungskatalysatoren, um schon beschichtete Tragkörper, das heißt um Beschichtungskatalysatoren, oder auch um Vollkatalysatoren handeln.

Diese Aufgabe wird gelöst durch ein Verfuhren zur Herstellung eines Wabenkörpers aus einem keramischen Material gemäß den Patentansprüchen.

Unter Kanaldurchmesser wird hier der Durchmesser eines Kreises verstanden, der dieselbe Querschnittsfläche wie ein Strömungskanal besitzt.

Die Erfindung geht von homogenen Wabenkörpern aus, deren Trennwände zwischen den Strömungskanälen über den gesamten Querschnitt der Wabenkörper gleiche Dicke aufweisen. Dadurch lassen sich die Wabenkörper mit den bekannten Techniken herstellen und es treten bei der Trocknung und beim Brennen keine herstellungsbedingten Probleme auf. Die Erhöhung der radialen Druckfestigkeit wird durch eine entsprechende Nachbehandlung der äußeren Randzone der Wabenkörper erzielt. Die Erfindung ist jedoch nicht auf homogene Wabenkörper beschränkt. Vielmehr läßt sich die Nachbehandlung auch auf inhomogene Wabenkörper anwenden und führt bei diesen zu einer weiteren Verstärkung ihrer radialen Druckfestigkeit.

Die Verstärkung der Wabenkörper erfolgt zum Beispiel durch Tränken beziehungsweise Imprägnieren des keramischen Materials des Zylindermantels und der Kanaltrennwände in der äußeren Randzone der Wabenkörper mit geeigneten Verstärkungsmaterialien oder durch Versehen dieses Bereiches mit einer verstärkenden Beschichtung. Für die Nachbehandlung der Wabenkörper werden wässrige oder organische Zubereitungen anorganischer Stoffe, wie zum Beispiel Lösungen und Suspensionen, verwendet. Gegebenenfalls werden Vorläuferverbindungen der verstärkenden Materialien verwendet, die durch ein abschließendes Brennen in die verstärkende Form überfuhrt werden.

Geeignete, temperaturstabile Stoffe zur Verstärkung der Wabenkörper sind zum Beispiel anorganische Füllmaterialien, beziehungsweise keramische Kleber, für die Poren der Wabenkörper wie Aluminiumoxidsol, Zirkondioxidsol, Zirkonsilikatsol, Kieselsol und Alkalisilikate wie zum Beispiel Natriumsilicat (Wasserglas) in der Form einer wässrigen oder organischen Lösung oder Suspension. Ebenfalls möglich sind feinteilige Glasuren, Fritten oder Emails, die meist vor dem Aufbringen der katalytisch aktiven Beschichtung auf die Tragkörper aufgeschmolzen werden oder erst bei Betrieb des Katalysators aufschmelzen. Die Wahl des anorganischen Stoffes richtet sich nach dem Material des Tragkörpers und auch nach der katalytischen Beschichtung, denn es gilt, schädliche Auswirkungen auf Tragkörper und katalytische Aktivität der Katalysatorbeschichtung zu vermeiden.

Als Glasur werden gewöhnlich Gläser aus Quarz, Tonerde, Alkalien, Erdalkalien und niedrig schmelzenden Oxiden als Flußmittel verstanden. Bei den Fritten handelt es sich gewöhnlich um Alkaliborosilikatgläser auf der Basis der Glas bildenden Oxide SiO₂, B₂O₃, Na₂O, K₂O und Al₂O₃. Emails sind Mischungen aus Fritten und keramischen Trübungsmitteln wie zum Beispiel Oxiden von Titan, Zirkon, Antimon und Molybdän und gegebenenfalls Haftvermittlern. Die konkrete Zusammensetzung dieser Materialien muß die spätere Anwendung als Träger für die katalytisch aktive Beschichtung berücksichtigen, um schädliche Auswirkungen auf die katalytische Aktivität zu vermeiden. Darüber hinaus kann durch die Zusammensetzung die Halbkugeltemperatur dieser Materialien dem Temperaturbereich der späteren Anwendung angepasst werden. Die Halbkugeltemperatur lässt sich durch Änderung der Zusammensetzung in einem Bereich zwischen etwa 400 und 1300°C einstellen und somit optimal auf den Anwendungsfall abstimmen. Unter der Halbkugeltemperatur wird diejenige Temperatur eines zuvor erschmolzenen Prüfkörpers aus dem betreffenden Material verstanden, bei dem infolge der Erweichung des Materials der Radius seiner Basisfläche gleich seiner Höhe ist.

Die Dicke der verstärkten äußeren Randzone kann den Anwendungserfordernissen angepasst werden. Sie kann bis zu einem Drittel des äquivalenten Durchmessers des Wabenkörpers betragen. Unter dem äquivalenten Durchmesser des Wabenkörpers wird hier der Durchmesser eines Kreises verstanden, dessen Fläche gleich der Querschnittsfläche des Wabenkörpers ist.

Zur Herstellung der erfindungsgemäßen Wabenkörper kann von den Grünkörpern, von gebrannten Wabenkörpern oder von katalytisch beschichteten Wabenkörpern ausgegangen werden. Das keramische Material der Wabenkörper kann dabei teilweise oder vollständig, das heißt bis zu 100%, aus katalytisch aktivem Material bestehen und somit einen Vollkatalysator bilden. In allen Fällen erfolgt das Ein- oder Aufbringen der verstärkenden Materialien unter Verwendung einer wässrigen oder organischen Zubereitung dieser Materialien und unter Anwendung bekannter Beschichtungstechniken. So kann die Zubereitung des oder der anorganischen Stoffe durch Tauchen, Übergießen, Einpumpen oder Durchsaugen in das keramische Material der Kanalwände der äußeren Randzone des Wabenkörpers ein- oder auf das keramische Material aufgebracht werden. Um dabei eine Beschichtung der Strömungskanäle im Zentralbereich des Wabenkörpers zu vermeiden, werden die Stirnflächen im Zentralbereich in geeigneter Weise abgedeckt. Das kann zum Beispiel mit entsprechende Blenden geschehen. Ebenso ist es möglich, die Kanäle der zentralen Zone des Wabenkörpers temporär zum Beispiel mit Wachs zu verstopfen oder mit einem Klebeband abzukleben.

Die verstärkenden Materialien werden nach dem Ein- oder Aufbringen gegebenenfalls getrocknet und danach durch Brennen in die endgültige Form überführt, beziehungsweise aufgeschmolzen. Hierfür sind abhängig von den verwendeten Materialien Temperaturen zwischen 300 bis über 1500° C notwendig. Wird von Grünkörpern ausgegangen, so wird hierbei auch der Grünkörper in den fertigen Wabenkörper überführt. Das erfordert eine entsprechende Anpassung der Brennbedingungen.

Im Falle von Lösungen und auch Solen kann es ausreichend sein, den Zylindermantel mit der wässrigen oder organischen Zubereitung von außen zu besprühen. Durch die Porosität der Wabenkörper durchdringen die Vorläuferverbindungen der verstärkenden Materialien den äußeren Randbereich des Wabenkörpers. Die Dicke dieses Randbereiches kann durch Menge und Einwirkungsdauer der Zubereitung gesteuert werden. Diese Art der Verstärkung ist besonders bei Grünkörpern wirkungsvoll. In diesem Fall können auch Imprägnierlösungen sogenannter Mineralisatoren verwendet werden. Hierbei handelt es sich um Zusätze wie zum Beispiel Lithium, Bor, Fluor und Wolfram, die eine Kristallbildung einleiten.

Die Nachbehandlung von homogenen oder inhomogenen Wabenkörpern führt also zu erfindungsgemäßen Wabenkörpern mit verbesserter radialer Druckfestigkeit gegenüber den nicht nachbehandelten Wabenkörpern. Es wurde weiterhin gefunden, dass die Nachbehandlung auch bei katalytisch beschichteten Tragkörpern, das heißt bei fertigen Abgaskatalysatoren, zu einer Verbesserung der radialen Druckfestigkeit führt. Ein weiterer Gegenstand der Erfindung sind daher monolithische Beschichtungskatalysatoren auf inerten Tragkörpern, deren radiale Druckfestigkeit dadurch verbessert ist, dass das keramische Material des Zylindermantels sowie der Kanalwände in der äußeren Randzone des Wabenkörpers und die auf diesen Wänden aufgebrachte katalytisch aktive Beschichtung durch Auf- oder Einbringen eines oder mehrerer anorganischer Stoffe verstärkt sind. Zur Verstärkung können hier die schon besprochenen Materialien eingesetzt werden.

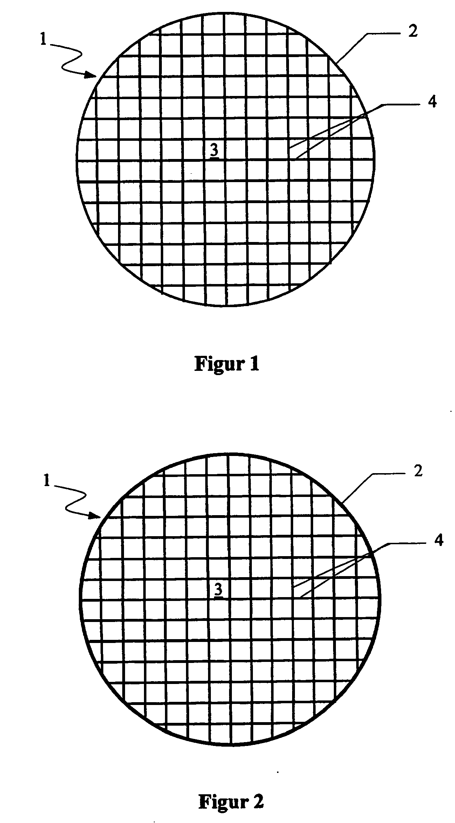

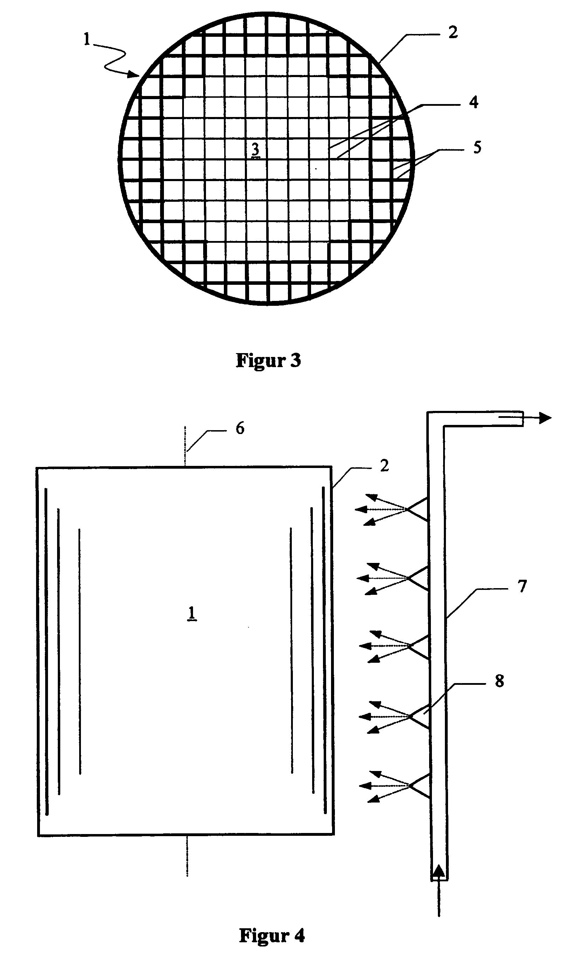

Die Erfindung wird nun an Hand der Figuren 1 und 4 näher erläutert. Es zeigen
- **Figur 1:**: Aufsicht auf die Stirnfläche eines homogenen Wabenkörpers, dessen Mantel dieselbe Dicke wie die Kanalwände aufweist.
- **Figur 2:**: Aufsicht auf die Stirnfläche eines homogenen Wabenkörpers, dessen Mantel eine größere Dicke als die Kanalwände aufweist.
- **Figur 3:**: Aufsicht auf die Stirnfläche eines inhomogenen Wabenkörpers
- **Figur 4:**: Imprägnieren des Zylindermantels eines Wabenkörpers mit einer Imprägnierlösung, die Vorläuferverbindungen von verstärkenden, anorganischen Stoffe enthält.

Die Figuren 1 bis 3 zeigen verschiedene Wabenkörper, jeweils mit kreisförmigem Querschnitt. Figur 1 zeigt einen homogenen Wabenkörper, dessen Zylindermantel dieselbe Dicke wie die Kanalwände aufweist. Als homogen wird ein Wabenkörper im Rahmen dieser Erfindung bezeichnet, wenn die Kanalwände über den gesamten Querschnitt des Wabenkörpers gleiche Dicke aufweisen. Im Gegensatz dazu ist die Dicke der Kanalwände im Randbereich des Querschnittes eines inhomogenen Wabenkörpers gegenüber dem zentralen Bereich verstärkt. In den Figuren 1 bis 3 bezeichnet die Bezugsziffer (1) den Wabenkörper. (2) bezeichnet den Mantel des Wabenkörpers, (3) einen Strömungskanal und (4) die Kanal- beziehungsweise Trennwände zwischen den Strömungskanälen. In den Figuren 1 bis 3 sind Wabenkörper mit quadratischem Querschnitt der Strömungskanäle gezeichnet, die in einem gleichmäßigen Raster über den Querschnitt des Wabenkörpers verteilt sind. Die erfindungsgemäße Verstärkung des Wabenkörpers durch eine Nachbehandlung mit geeigneten, anorganischen Stoffen ist jedoch in gleicher Weise auch auf Wabenkörper mit anderen Kanalquerschnitten - rechteckig, dreieckig oder sechseckig - anwendbar.

Figur 2 zeigt einen homogenen Wabenkörper, dessen Mantel eine größere Dicke als die Kanalwände aufweist.

Figur 3 zeigt eine Aufsicht auf eine Stirnfläche eines inhomogenen Wabenkörpers. Die Strömungskanäle werden von den Kanalwänden (4), beziehungsweise (5), begrenzt. In einer äußeren, an den Zylindermantel des Wabenkörpers anschließenden Randzone, die etwa 2 Lagen von Strömungskanälen umfaßt, sind die Kanalwände (5) gegenüber den Kanalwänden (4) im Inneren des Wabenkörpers verstärkt, um seine mechanische Stabilität zu erhöhen.

Figur 4 zeigt eine spezielle Apparatur, die für das Imprägnieren der äußeren Randzone eines Wabenkörpers mit verstärkenden Imprägnierlösungen geeignet ist. Der Wabenkörper wird vor einer Reihe von Spritzdüsen (8) um seine Mittelachse (6) gedreht. Die Spritzdüsen (8) werden durch ein gemeinsames Zuführungsrohr (7) mit der Imprägnierlösung versorgt. Auf diese Art und Weise kann der Zylindermantel (1) des Wabenkörpers imprägniert werden.

In sehr einfacher Weise kann das Imprägnieren auch durch Abrollen eines nassen Schwammes oder Tuches am Zylindermantel des Wabenkörpers erfolgen.

## Patentansprüche

1. Verfahren zur Herstellung eines keramischen Wabenkörpers mit verbesserter radialer Druckfestigkeit, welcher eine zylindrische Form mit einer ersten und einer zweiten Stirnfläche und einem Zylindermantel aufweist und der von einer Stirnfläche zur anderen von achsenparallelen Kanälen durchzogen ist, die von Kanalwänden gebildet werden, durch Anfertigen einer keramischen, extrudierbaren Masse und Extrudieren dieser Masse zu einem Grünkörper,
**dadurch gekennzeichnet,**
**dass** eine wässrige oder organische Zubereitung eines oder mehrerer anorganischer Stoffe durch Tauchen, Übergießen, Einpumpen oder Durchsaugen in das keramische Material der Kanalwände einer äußeren Randzone deren Dicke mehrere Kanaldyrchuresser beträgt ein oder aufgebracht wird und der Grünkörper abschließend durch Brennen in den Wabenkörper überführt wird.

2. Verfahren nach Anspruch 1,
**dadurch gekennzeichnet,**
**dass** als anorganische Stoffe Lösungen, Sole, keramische Kleber, Glasuren, Fritten oder Emails verwendet werden.

3. Verfahren nach Anspruch 2,
**dadurch gekennzeichnet,**
**dass** die Dicke der äußeren Randzone des Wabenkörpers bis zu einem Drittel des äquivalenten Durchmessers des Wabenkörpers beträgt.

4. Verfahren nach Anspruch 3,
**dadurch gekennzeichnet ,**
**dass** das keramische Material des Wabenkörpers bis zu 100% aus katalytisch aktivem Material besteht.

5. Verfahren nach Anspruch 4,
**dadurch gekennzeichnet,**
**dass** der Zylindermantel des Grünkörpers durch Besprühen mit einer wässrigen oder organischen Zubereitung des oder der anorganischen Stoffe imprägniert und der Grünkörper abschließend durch Brennen in den Wabenkörper überführt wird.

## Claims

1. A process for the production of a ceramic honeycomb body with improved radial pressure resistance, having a cylindrical shape with a first and a second end face and with a cylindrical shell, and with channels that traverse said honeycomb body in an axially parallel direction from one end face to the other, which channels are formed by channel walls, by producing a ceramic extrudable mass and extruding said mass to form an unsintered body,
**characterised in that**
an aqueous or organic preparation of one or more inorganic substances is deposited in or on the ceramic material of the channel walls of an outer marginal zone of a thickness of several channel diameters by immersion, pouring, injection or suction, and the unsintered body is subsequently transformed into the honeycomb body by firing.

2. The process according to claim 1,
**characterised in that**
solutions, sols, ceramic glues, glazing, frits or enamels are used as inorganic substances.

3. The process according to claim 2,
**characterised in that**
the thickness of the outer marginal zone of the honeycomb body amounts to up to one third of the equivalent diameter of the honeycomb body.

4. The process according to claim 3,
**characterised in that**
the ceramic material of the honeycomb body consists of up to 100% catalytically active material.

5. The process according to claim 4,
**characterised in that**
the cylindrical shell of the unsintered body is impregnated by spraying it with an aqueous or organic preparation of the inorganic substance(s) and the unsintered body is subsequently transformed into the honeycomb body by firing.

## Revendications

1. Procédé de fabrication d'un corps céramique en nid d'abeilles ayant une résistance radiale à la pression améliorée, et présentant une forme cylindrique avec une première et une deuxième face frontale et une enveloppe cylindrique, traversé d'une face frontale à l'autre par des canaux à axes parallèles, formés par des parois de canaux, par préparation d'une masse céramique extrudable et extrusion de cette masse en un corps cru,
**caractérisé en ce qu'**
on introduit ou on applique une préparation aqueuse ou organique d'une ou de plusieurs substances inorganiques, par immersion, coulée, pompage ou aspiration dans le matériau céramique des parois des canaux d'une zone marginale extérieure, dont l'épaisseur représente plusieurs diamètres de canaux, et finalement on transforme par cuisson le corps cru en corps en nid d'abeilles.

2. Procédé selon la revendication 1,
**caractérisé en ce que**
comme substances inorganiques, on utilise des solutions, des sols, des colles céramiques, des émaillages, des frittes ou des émaux.

3. Procédé selon la revendication 2,
**caractérisé en ce que**
l'épaisseur de la zone marginale extérieure du corps en nid d'abeilles représente jusqu'à un tiers du diamètre équivalent du corps en nid d'abeilles.

4. Procédé selon la revendication 3,
**caractérisé en ce que**
le matériau céramique du corps en nid d'abeilles est constitué jusqu'à 100 % de matériau catalytiquement actif.

5. Procédé selon la revendication 4,
**caractérisé en ce que**
l'enveloppe cylindrique du corps cru est imprégnée par pulvérisation d'une préparation aqueuse ou organique de la substance ou des substances inorganiques, et finalement on transforme par cuisson le corps cru en corps en nid d'abeilles.
